# EUROPEAN PATENT APPLICATION

(11) **EP 3 098 598 A1**
(43) Date of publication of application: **30.11.2016**
(21) Application number: 16001117.7
(22) Date of filing: 17.05.2016
(51) Int. Cl.: G01N 27/327

(54) **ELECTROCHEMICAL TEST STRIP AND MEASURING APPARATUS HAVING THE SAME**

(30) Priority: 21.05.2015 TW 104207919
(71) Applicant: Apex Biotechnology Corporation, Hsinchu City 300 (TW)
(72) Inventor: LU, Yi-Chen, 300 Hsinchu City (TW); Kuan, Tang-Ching, 300 Hsinchu City (TW); Wang, Po-Min, 300 Hsinchu City (TW)
(74) Representative: Flaccus, Rolf-Dieter

(57) **Abstract**

The disclosure provides an electrochemical test strip comprising a set of measuring electrodes and a set of multifunctional electrodes electrically isolated from the set of measuring electrodes. The set of multifunctional electrodes is formed with a short-circuit part and an open-circuit part connecting the short-circuit part. The set of multi-functional electrodes is able to electrically connect a measuring meter. The measuring meter comprises at least two function modules, wherein both of the at least two function modules are executed by way of the open-circuit part, or by way of the short-circuit part, or one of the at least two function modules is executed by way of the open-circuit part and the other one of the at least two function modules is executed by way of the short-circuit part. The disclosure also provides a measuring apparatus having the electrochemical test strip and the measuring meter.

## Description

### BACKGROUND OF THE INVENTION

### FIELD OF THE INVENTION

The present invention relates to an electrochemical test strip and a measuring apparatus having the same and, more particularly, to an electrochemical test strip for measuring sample concentration and a measuring apparatus having the same.

### DESCRIPTION OF THE PRIOR ART

Electrochemical test strips are widely used in medical and biochemical measurement. In recent years, to protect users, enhance ease of use, and increase measurement precision, an electrochemical test strip not only has at least one electrode for measuring sample concentration but also has other electrodes for correction or convenience functions. US patent NO. 7,645,373 discloses a test strip capable of automatic identification. Taiwan patent NO. I428592 discloses a method of confirming whether a test strip has been inserted into a measuring meter. Taiwan patent NO. I412740 discloses a test strip capable of automatic identification and correction. Taiwan patent NO. I335428 discloses a test strip that actives a measuring meter and confirms whether the test strip is correctly positioned.

### SUMMARY OF THE INVENTION

The inventor of the present invention realizes that the prior art mostly involves using at least one electrode loop to perform one function and thus brings a problem - an electrochemical test strip must have a large surface area in order to contain various electrodes required for the aforesaid multiple functions. Therefore, it is necessary to provide a novel innovative technique for solving the aforesaid problem.

The present invention provides an electrochemical test strip and a measuring apparatus having the same. The electrochemical test strip of the present invention has an electrode system which is simpler than those from the prior art and can be operated by connecting a measuring meter of a measuring apparatus to execute multiple functions. Specifically, the electrochemical test strip of the present invention uses one multifunctional electrode to perform each of the multiple functions instance by instance, and no matter which function is selected the function selected in each instance is executed through the same multifunctional electrode, so as to accomplish all the selected function.

In an aspect, the present invention provides an electrochemical test strip comprising a set of measuring electrodes and a set of multi-functional electrodes electrically isolated from the set of measuring electrodes. The set of multi-functional electrodes is formed with a short-circuit part and an open-circuit part connecting the short-circuit part. The set of multi-functional electrodes is able to electrically connect a measuring meter, wherein a loop state is formed when the short-circuit part electrically connects the measuring meter and an open-circuit state is formed when the open-circuit part electrically connects the measuring meter. The measuring meter comprises at least two function modules, wherein both of the at least two function modules are executed by way of the short-circuit part, or by way of the open-circuit part, or one of the at least two function modules is executed by way of the short-circuit part and the other one of the at least two function modules is executed by way of the open-circuit part.

In an embodiment, the electrochemical test strip has only one the set of multi-functional electrodes.

In another embodiment, the electrochemical test strip has the set of measuring electrodes and the set of multifunctional electrodes but is free of any other circuits.

In another embodiment, the set of measuring electrodes only comprises one set of sample measuring electrodes and one set of sample background measuring electrodes, wherein the electrochemical test strip has the set of measuring electrodes and the set of multifunctional electrodes but is free of any other circuits.

In another embodiment, the set of multifunctional electrodes has only one the short-circuit part.

In another embodiment, the set of multifunctional electrodes has only one the open-circuit part.

In another embodiment, regarding the electrochemical test strip, the short-circuit part or the open-circuit part is made of a metal.

In another embodiment, the set of measuring electrodes defines a measurement zone for measuring a sample and a connection zone electrically connected to the measuring meter, with the open-circuit part positioned proximal to the measurement zone and distal to the connection zone.

In another embodiment, the set of measuring electrodes defines a measurement zone for measuring a sample, with the open-circuit part configured to allow the sample to come into contact with the measurement zone before coming into contact with the open-circuit part.

In another embodiment, the set of multifunctional electrodes is of a shape selected from the group consisting of H shape, Y shape, X shape, V shape, U shape, 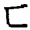 shape, I shape, and Λ shape.

In another embodiment, the set of multifunctional electrodes is disposed closer to a center of the electrochemical test strip than the set of measuring electrodes.

In another embodiment, the set of multifunctional electrodes is disposed closer to an edge of the electrochemical test strip than the set of measuring electrodes.

In another aspect, the present invention provides a measuring apparatus including the electrochemical test strip and the measuring meter.

In an embodiment, the measuring meter comprises: a switch for selecting one of the at least two function modules so that the selected function module electrically connects with the set of multifunctional electrodes, wherein the switch comprises a switch selecting unit electrically connectable to the set of multifunctional electrodes; and a plurality of contacts each corresponding to each function module to be selected, wherein one of the at least two function modules is selected by allowing the switch selecting unit to electrically connect with the contact corresponding to the selected function.

In another embodiment, when the electrochemical test strip not carrying any sample is electrically connected to the measuring meter, the measuring meter forms the loop state together with the short-circuit part, forms the open-circuit state together with the open-circuit part, and forms another open-circuit state together with the set of measuring electrodes.

In another embodiment, the at least two function modules comprise a wake-up function module for activating the measuring meter, and the formation of the loop state produces a signal sent to a processor of the measuring meter to activate the measuring meter.

In another embodiment, the measuring meter comprises a diode or a transistor, which is turned on in the loop state to activate the measuring meter.

In another embodiment, the at least two function modules comprise an electrostatic protection module for protecting the measuring meter against electrostatic charges from the electrochemical test strip, wherein the open-circuit part guides the electrostatic charges to a ground path or an electrostatic protection circuit of the measuring meter.

In another embodiment, the electrostatic protection circuit is one selected from the group consisting of an SMD ceramic capacitor, a varistor, a multiple deck classifier (MLV), and a transient voltage suppressor (TSV).

In another embodiment, the set of measuring electrodes defines a measurement zone for measuring a sample and a connection zone electrically connected to the measuring meter, and the at least two function modules comprise a quantity measuring module for determining whether a sample has fully covered the measurement zone, wherein the open-circuit state turns into a state of electrical connection of the open-circuit part and the set of measuring electrodes as soon as the sample comes into contact with the open-circuit part, so as to determine that the sample has fully covered the measurement zone.

In another embodiment, the open-circuit part is configured to allow the sample to come into contact with the measurement zone before coming into contact with the open-circuit part.

In another embodiment, the at least two function modules comprise an electrode impedance correction module for correcting an impedance of the set of measuring electrodes, wherein the loop state formed upon electrical connection of the short-circuit part and the measuring meter allows the measuring meter to measure an impedance value of the multifunctional electrode, so as to obtain a difference between the impedance value and a predetermined impedance value, and correct the impedance of the set of measuring electrodes in accordance with the difference.

In another embodiment, the measuring meter comprises a connector for electrically connecting the set of measuring electrodes and the set of multifunctional electrodes to the measuring meter, wherein an electrical contact between the connector and the set of measuring electrodes and an electrical contact between the connector and the set of multifunctional electrodes occur on a same plane.

### BRIEF DESCRIPTION OF THE DRAWINGS

Advantages of the present invention are hereunder illustrated with specific embodiments in conjunction with the accompanying drawings, in which:
FIG. 1 is an exploded view of an electrochemical test strip of the present invention;
FIG. 2 is a schematic view of an electrode system of the present invention;
FIGs. 3A -3J are schematic views of various shapes of a set of multifunctional electrodes of the present invention;
FIG. 4 is a schematic view of a measuring apparatus having the electrochemical test strip of the present invention;
FIG. 5 is a schematic view of the operation of a switch of the present invention; and
FIG. 6 is a schematic view of the electrochemical test strip inserted into a connector according to the present invention.

### DETAILED DESCRIPTION OF THE EMBODIMENTS

To enable persons skilled in the art to understand the present invention and the claims thereof, preferred embodiments of the present invention are illustrated with the accompanying drawings and described hereunder. To focus on the essential technical features of the present invention, the description below omits conventional components, related materials, and related processing techniques. Similar components shown in the accompanying drawings are denoted with identical reference numerals. To visualize the present invention well, the accompanying drawings are not drawn to scale. The devices and components illustrated with the embodiments and described below are illustrative rather than restrictive of the scope of the present invention.

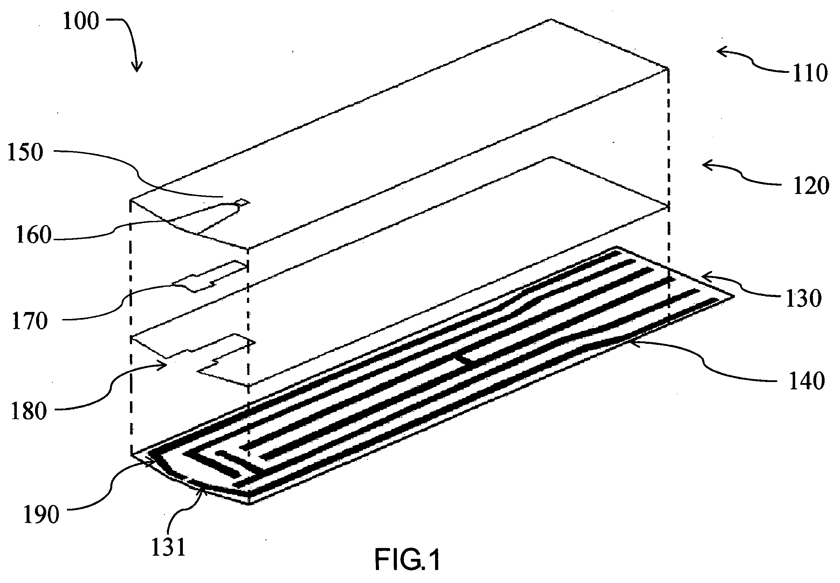

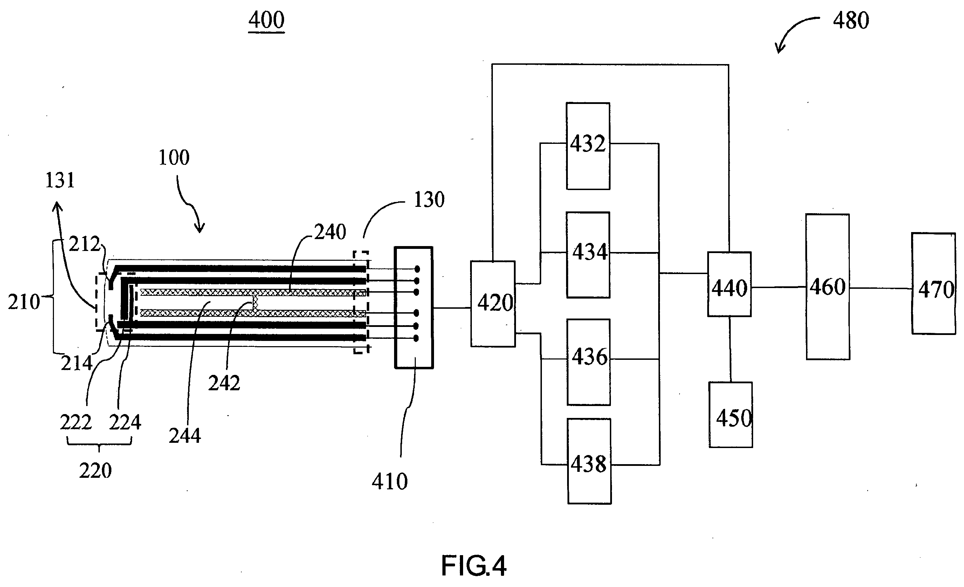

FIG. 1 is an exploded view of an electrochemical test strip 100 according to an embodiment of the present invention. The electrochemical test strip 100 of the present invention comprises an insulating substrate 140, an electrode system 190 disposed on the insulating substrate 140, an upper separation layer 110, a lower separation layer 120, and a reaction layer 170 sandwiched between the upper separation layer 110 and the lower separation layer 120. The insulating substrate 140 is electrically insulating and made of a material including, but not limited to, polyvinyl chloride (PVC), glass fiber, polyester, bakelite board, polyethylene terephthalate (PET), polycarbonate (PC), polypropylene (PP), polyethylene (PE), polystyrene (PS), or ceramic. The electrode system 190 has one end defined as a connection zone 130 connected to a measuring meter 480 (shown in FIG. 4) having a plurality of function modules; and the other end defined as a measurement zone 131 having electrode ends to be contact with a sample and a reactant. Furthermore, the electrode system 190 is made of any electrically conductive substance, such as carbon paste, or metal, like silver paste, copper paste, carbon-silver composite paste, the like, and a combination thereof.

A sampling port 180 is formed on the lower separation layer 120 of the electrochemical test strip 100 and adapted to collect a liquid sample for later use. A vent 150 is disposed on the upper separation layer 110 and adapted to discharge gas from the reaction layer 170 sandwiched between the upper separation layer 110 and the lower separation layer 120. The ingredients of the reaction layer 170 include an oxidoreductase or any other appropriate reactant which undergoes a chemical reaction with the liquid sample. The type of the oxidoreductase varies from liquid sample to liquid sample. Furthermore, a transparent observation window 160 is disposed on the upper separation layer 110 as needed and adapted to observe how the liquid sample undergoes the reaction.

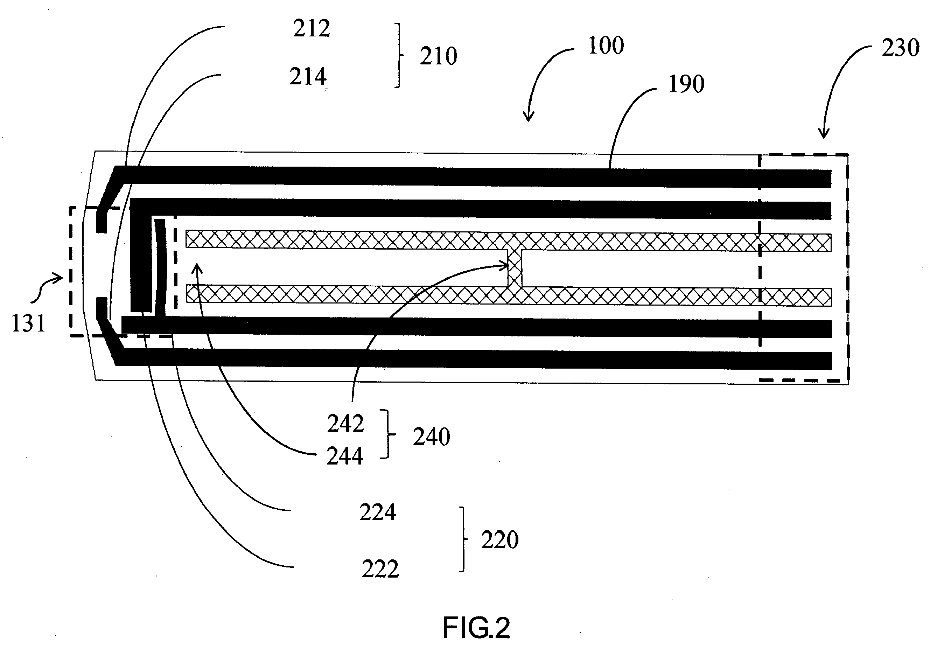

FIG. 2 depicts the electrode system 190. As shown in the figure, in this embodiment, the electrode system 190 comprises two set of measuring electrodes, namely a set of sample background measuring electrodes 210 and a set of sample measuring electrodes 220 (hereinafter collectively referred to as "the set of measuring electrodes 210, 220" or "the set of measuring electrodes 210/220".) For example, the aforesaid sample is a whole blood sample. The set of sample measuring electrodes 220 measures the concentration of an analyte contained in the whole blood sample. The analyte can be glucose, cholesterol, lactic acid, triglyceride or others. The proportions of interfering substances other than the analyte, which are be present in the sample, are measured with the set of sample background measuring electrodes 210. The analyte concentration measured with the set of sample measuring electrodes 220 is corrected in accordance with the measurement result of the set of sample background measuring electrodes 210. The set of sample background measuring electrodes 210 and the set of sample measuring electrodes 220 are equipped with operating electrodes 212, 222 and reference electrodes 214, 224, respectively. The electrode system 190 further comprises a set of multifunctional electrodes 240. Contact ends of the electrodes are disposed in the connection zone 130 at the tail of the electrode system 190 and electrically connected to the measuring meter. As soon as the electrochemical test strip 100 gets inserted into the measuring meter, the measuring meter measures the analyte and performs any other related functions through the electrode system 190. The embodiment of the measuring meter is discussed later. Furthermore, in the other embodiments, the electrode system comprises two sample measurement electrode units for measuring two analyte concentrations, with the set of sample measuring electrodes sharing the same reference electrode.

Referring to FIG. 2, the set of multifunctional electrodes 240 is electrically isolated from the set of measuring electrodes 210, 220. The set of multifunctional electrodes 240 has a short-circuit part 242 and an open-circuit part 244. The short-circuit part 242 and the open-circuit part 244 are connected to each other. Specifically speaking, the short-circuit part 242 and the open-circuit part 244 are disposed in the same electrode and electrically connected to each other. The set of multifunctional electrodes 240 is able to electrically connect to the measuring meter wherein the measuring meter electrically connects the short-circuit part 242 to form a loop state; or the measuring meter electrically connects the open-circuit part 244 to form an open-circuit state. As mentioned above, the measuring meter has a plurality of function modules. The function modules are various appropriate function modules, including such multiple function modules electrically connecting with the set of multifunctional electrodes 240 in operation and other multiple function modules electrically connecting the set of measuring electrodes 210, 220 in operation. At least two of the function modules are electrically connected to the set of multifunctional electrodes 240 and selected to operate individually instance by instance. The at least two function modules in operation are selectively electrically connected to one of the short-circuit part 242 and the open-circuit part 244. Specifically speaking, the at least two function modules both operate through the short-circuit part 242, both operate through the open-circuit part 244, or one operates through the short-circuit part 242 and the other operates through the open-circuit part 244.

Therefore, the set of multifunctional electrodes 240 of the electrochemical test strip 100 of the present invention can be reused in response to the execution of different function modules so that different functions selected in every instance are performed through the same set of multifunctional electrodes 240 so as for the selected functions to be accomplished. With the set of multifunctional electrodes 240 being reusable, the electrode system of the present invention is simpler to use than those from the prior art, whereas the electrochemical test strip of the present invention comes with less surface area for containing electrodes required for multiple functions.

The plurality of function modules comprise: a wake-up function module for activating a measuring meter, an electrostatic protection module for protecting the measuring meter against electrostatic charges, a quantity measuring module for determining whether a sample has fully covered the measurement zone, an electrode impedance correction module for correcting the impedance of the set of measuring electrodes, and any other appropriate function modules. In an embodiment, the electrochemical test strip 100 executes the wake-up function module and the electrode impedance correction module, wherein selecting to execute the wake-up function module is followed by executing the wake-up function module through the short-circuit part 242, and selecting to execute the electrode impedance correction module is followed by executing the electrode impedance correction module through the short-circuit part 242. In another embodiment, the electrochemical test strip 100 executes the electrostatic protection module and the quantity measuring module, wherein selecting to execute the electrostatic protection module is followed by executing the electrostatic protection module through the open-circuit part 244, and selecting to execute the quantity measuring module is followed by executing the quantity measuring module through the open-circuit part 244. In another embodiment, the electrochemical test strip 100 executes the wake-up function module and the quantity measuring module, wherein selecting to execute the wake-up function module is followed by executing the wake-up function module through the short-circuit part 242, whereas selecting to execute the quantity measuring module is followed by executing the quantity measuring module through the open-circuit part 244.

In a preferred embodiment, regarding the electrochemical test strip of the present invention, the short-circuit part or the open-circuit part is made of a low-impedance material, such as a metal. To enhance the sensitivity of the wake-up function of the wake-up function module in operation, the short-circuit part is preferably made of a low-impedance material. To enhance the capability of the electrostatic protection module in operation to guide electrostatic charges, the open-circuit part is preferably made of a low-impedance material. To enhance the capability of the quantity measuring module in operation to guide electrostatic charges, the open-circuit part is preferably made of a low-impedance material.

Referring to FIG. 2, the electrochemical test strip 100 comprises two set of measuring electrodes 210, 220 and one set of multifunctional electrodes 240. In this embodiment, the electrochemical test strip 100 has only one set of multifunctional electrodes 240, with only one short-circuit part 242 and one open-circuit part 244. In this embodiment, the electrochemical test strip 100 has the set of measuring electrodes 210, 220 and the set of multifunctional electrodes 240 but is free of any other circuits. In this embodiment, the electrode system of the electrochemical test strip 100 takes up less space, which is otherwise occupied by a test strip, than those electrochemical test strips from the prior art. The present invention provides any electrochemical test strip which embodies various changes made to this embodiment, such as an electrochemical test strip which has a set of sample measuring electrodes and the set of multifunctional electrodes 240 with only one short-circuit part 242 and one open-circuit part 244 but is free of any other circuits.

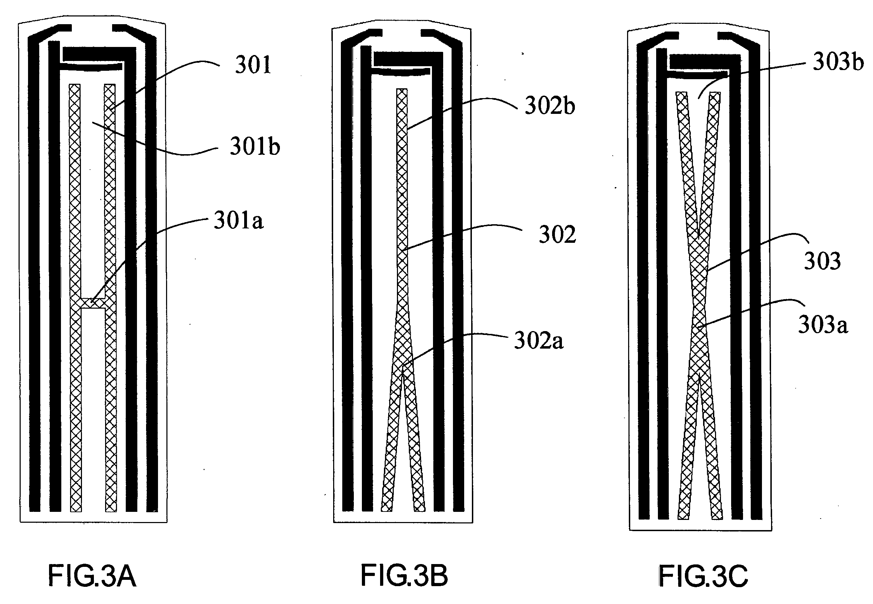

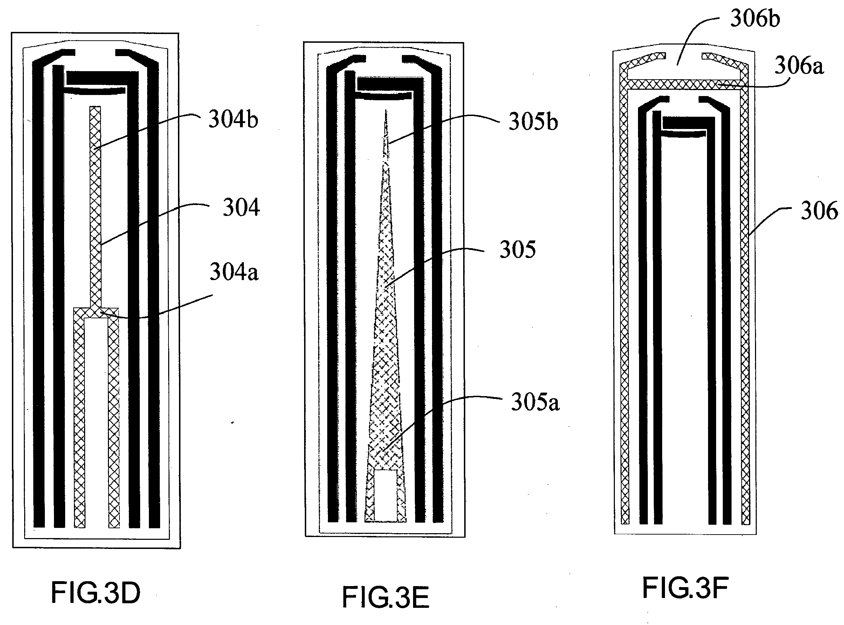

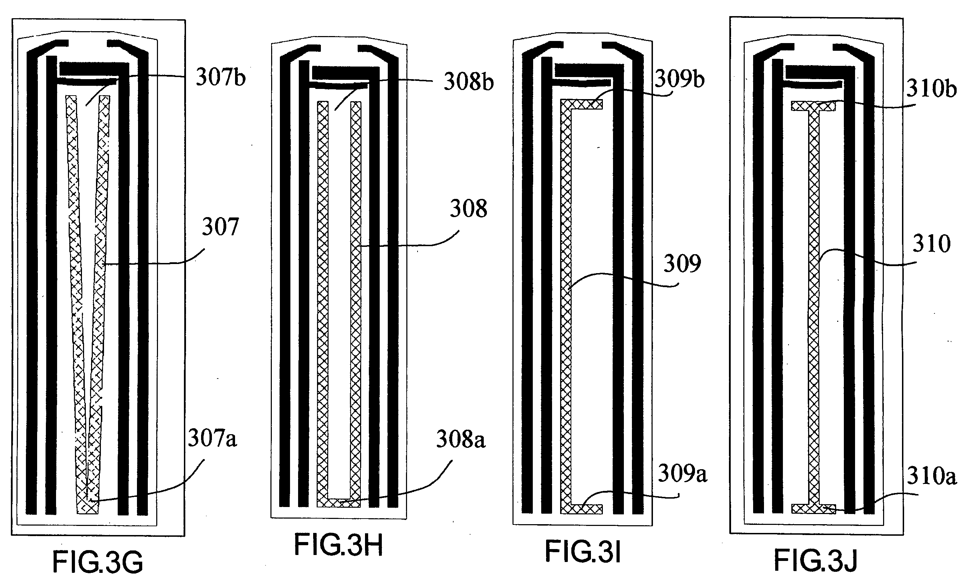

Referring to FIG. 3A through FIG. 3J, set of multifunctional electrodes 301, 302, 303, 304, 305, 306, 307, 308, 309, 310 of the electrochemical test strip of the present invention take on various shapes, including H shape (301), Y shape (302, 304), X shape (303), V shape (307), U shape (308), C shape (309), I shape (310), and Eiffel Tower shaped (305), or any other appropriate shape. Referring to FIG. 3A, 301 a denotes a short-circuit part, whereas 301 b denotes an open-circuit part. Referring to FIG. 3B, 302a denotes a short-circuit part, whereas 302b denotes an open-circuit part. Referring to FIG. 3C, 303a denotes a short-circuit part, whereas 303b denotes an open-circuit part. Referring to FIG. 3D, 304a denotes a short-circuit part, whereas 304b denotes an open-circuit part. Referring to FIG. 3E, 305a denotes a short-circuit part, whereas 305b denotes an open-circuit part. Referring to FIG. 3F, 306a denotes a short-circuit part, whereas 306b denotes an open-circuit part. Referring to FIG. 3G, 307a denotes a short-circuit part, whereas 307b denotes an open-circuit part. Referring to FIG. 3H, 308a denotes a short-circuit part, whereas 308b denotes an open-circuit part. Referring to FIG. 3I, 309a denotes a short-circuit part, whereas 309b denotes an open-circuit part. Referring to FIG. 3J, 310a denotes a short-circuit part, whereas 310b denotes an open-circuit part. Referring to FIG. 3F, the set of multifunctional electrodes 306 is disposed closer to the edge of the electrochemical test strip than a set of measuring electrodes 306'. The set of multifunctional electrodes 306 of FIG. 3F is of a shape similar to the set of measuring electrodes 306'. The set of multifunctional electrodes of the electrochemical test strip in FIG. 3A through FIG. 3J except FIG. 4F is disposed closer to the center of the electrochemical test strip than the set of measuring electrodes.

FIG. 4 is a schematic view of a measuring apparatus 400 having the electrochemical test strip 100 according to an embodiment of the present invention. The measuring apparatus 400 comprises the electrochemical test strip 100 and the measuring meter 480. The measuring meter 480 comprises a plurality of function modules (432 denotes module 1, 434 denotes module 2, 436 denotes module 3, and 438 denotes module n) and a connector 410 electrically connectable to the electrochemical test strip 100, and a switch 420 for selecting one of a plurality of function modules. The measuring apparatus 400 further comprises conventional components, such as a processor 440, a power supply 450, an analog-to-digital converter (ADC) 460, and a display unit 470.

Referring to FIG. 4, when the electrochemical test strip 100 not carrying any sample is inserted into the measuring meter 480, the measuring meter 480 forms a loop state together with the short-circuit part 242, forms an open-circuit state together with the open-circuit part 244, and forms another open-circuit state together with the set of measuring electrodes 210, 220. Before any sample is introduced into the electrochemical test strip 100, the reference electrodes 214, 224 and the operating electrodes 212, 222 of the set of measuring electrodes 210, 220 are electrically isolated from each other to thereby form an open-circuit state together with the measuring meter 480.

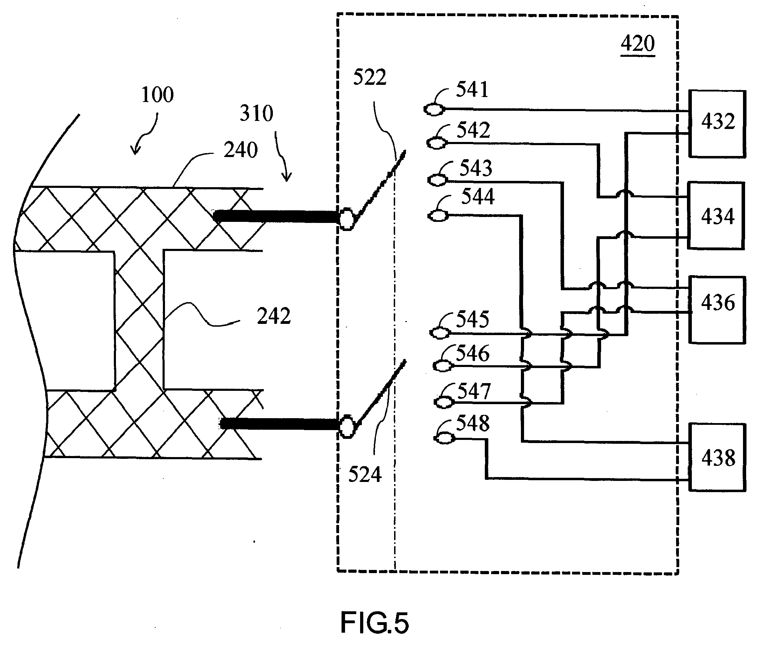

FIG. 5 is a schematic view of the operation of the switch 420 according to an embodiment of the present invention. As shown in the figure, the electrodes in the electrochemical test strip 100 are selectively connected to the function modules (for example, module 1 (432) ∼ module n (438)) by the switch 420. The selection of the function modules occurs before or after the insertion of the electrochemical test strip 100 into the measuring meter 480, depending on the required function. Referring to FIG. 4, the switch 420 comprises: switch selecting units 522, 524 electrically connectable to the set of multifunctional electrodes 240; and a plurality of contacts corresponding to a plurality of function modules, respectively, wherein the plurality of contacts includes contacts 541, 542, 543, 544, 545, 546, 547, 548. The switch selecting units 522, 524 has one end electrically connected to the connector 410 and has the other end adapted to select, as instructed by the processor 440, the switch selecting units 522, 524 to be electrically connected to the contacts. The electrochemical test strip 100 provides or receives an electrical signal through the connector 410. One of the ways of selecting one of the function modules entails causing the switch selecting units 522, 524 to electrically connect with the contacts corresponding to the selected function module. For example, upon determination that module 1 prevails, the processor 440 instructs the switch 420 to connect the switch selecting unit 522 and the contact 541 as well as connect the switch selecting unit 524 and the contact 545, so as to finalize the selection of module 1 (432). For example, upon determination that module n prevails, the processor 440 instructs the switch 420 to connect the switch selecting unit 522 and the contact 544 as well as connect the switch selecting unit 524 and the contact 548, so as to finalize the selection of module n.

Referring to FIG. 4, the selected function module is selectively electrically connected to one of the short-circuit part 242 and the open-circuit part 244 to thereby perform the function of the selected function module. As mentioned above, at least two of the function modules can be electrically connected to the set of multifunctional electrodes 240. Execution of the at least two function modules results in their selective electrical connection with one of the short-circuit part 242 and the open-circuit part 244. Specifically speaking, both the at least two function modules are executed through the short-circuit part 242 or the open-circuit part 244. Alternatively, one of the at least two function modules is executed through the short-circuit part 242 and the other through the open-circuit part 244.

The operation of the wake-up function module, electrostatic protection module, quantity measuring module, and electrode error correction module is described below, but the description is not restrictive of the function modules of the present invention.

### Wake-up Function Module

The wake-up function module is adapted to activate the measuring meter in a loop state formed between the short-circuit part and the wake-up function module. Referring to FIG. 4, in an embodiment, when the measuring meter 480 is in a sleep state, the processor 440 instructs the switch 420 to connect with the wake-up function module, such as module 1 (432). After the electrochemical test strip 100 has been inserted into the connector 410, a loop is formed between module 1 (432) and the short-circuit part 242 of the set of multifunctional electrodes 240 and adapted to send a signal to the processor 440, so as to activate the measuring meter 480. In another embodiment, the wake-up function module also servers a power-on function, effectuates an open circuit before being connected to the electrochemical test strip 100, and effectuates power-on by forming a loop through the short-circuit part 242 after being connected to the electrochemical test strip 100. In yet another embodiment, the wake-up function module comprises a diode or a transistor. Upon the insertion of the electrochemical test strip 100 into the measuring meter 480, the diode or transistor, which is initially turned off, gets turned on, thereby activating the measuring meter 480. In a further embodiment, to enhance the sensitivity of the wake-up function, the short-circuit part 242 of the set of multifunctional electrodes 240 in the electrochemical test strip 100 is a low-impedance loop.

### Electrostatic Protection Module

Up to 10 KV of electrostatic charges can be generated because of the friction between the human body and clothes or between the human body and any other object. The measuring apparatus requires a user to insert the electrochemical test strip into the measuring meter by hand. As a result, electrostatic charges gain access to the measuring meter readily through the electrode system on the electrochemical test strip, and in consequence the resultant instantaneous discharge current causes damage to the measuring meter. The electrostatic protection module of the present invention protects the measuring meter against electrostatic charges carried by the electrochemical test strip, by using the open-circuit part to guide the electrostatic charges to the ground or to an electrostatic protection circuit of the measuring meter. Referring to FIG. 4, in an embodiment, after the electrochemical test strip 100 has been inserted into the measuring meter 480 to activate the measuring meter 480, the processor 440 breaks the circuits of the set of measuring electrodes 210, 220 and switches to the electrostatic protection module (such as module 2 (434)). As shown in the figure, the set of measuring electrodes 210, 220 have the measurement zone 131 for measuring a sample and the connection zone 130 electrically connected to the measuring meter 480, wherein the open-circuit part 244 is positioned proximal to the measurement zone 131 and distal to the connection zone 130. The open-circuit part 244 guides electrostatic charges to the ground or to an electrostatic protection circuit with an SMD ceramic capacitor, a varistor, a multiple deck classifier (MLV), or a transient voltage suppressor (TSV). In another embodiment, to enhance the capability of the multifunctional electrode to guide electrostatic charges, the open-circuit part 244 of the electrochemical test strip 100 is made of a metal.

### Quantity Measuring Module

The quantity measuring module determines whether a sample is of a quantity large enough to fully cover the measurement zone. The quantity measuring module works as follows: the open-circuit state of the open-circuit part turns into a state of electrical connection of the open-circuit part and the set of measuring electrodes as soon as a sample comes into contact with the open-circuit part, so as to determine that the sample has fully covered the measurement zone. Referring to FIG. 4, in an embodiment, after a sample has been introduced into the reaction layer 170 (shown in FIG. 1) of the electrochemical test strip 100, the processor 440 switches the measuring meter to the quantity measuring module (such as module 3 (436)), then sends a potential signal to the set of measuring electrodes 210/220, and eventually performs electrical signal measurement on the open-circuit part 244 of the set of multifunctional electrodes 240. A measurement result which indicates that the open-circuit part 244 of the set of multifunctional electrodes 240 is in electrical connection with the set of measuring electrodes 210/220 justifies the determination that the sample has sufficient quantity to fully cover the measurement zone 131. In this embodiment, the open-circuit part 244 is configured to allow the sample to come into contact with the measurement zone 131 before coming into contact with the open-circuit part 244. In another embodiment, to enhance the sensitivity of the open-circuit part 244, the open-circuit part 244 is made of a low-impedance material.

### Electrode Error Correction Module

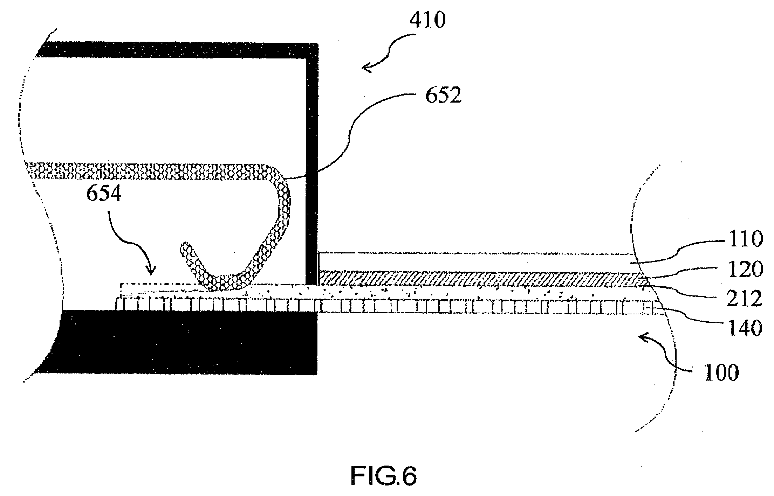

FIG. 6 is a schematic view of the electrochemical test strip 100 inserted into the connector 410 according to an embodiment of the present invention. As shown in the figure, the connector 410 is in electrical contact with the electrodes of the electrode system 190 through a conduction leaf spring 652. Referring to FIG. 6, the electrodes are exemplified by the operating electrode 212. The electrodes are predisposed to oxidation upon contact with air, thereby resulting in reduced electrical conductivity. Furthermore, when inserted into the connector 410, the electrochemical test strip 100 causes an abrasion 654 to the operating electrode 212 readily and thereby contributes to measurement-related errors, because the conduction leaf spring 652 is usually made of a reinforced metal.

The electrode error correction module is an electrode impedance correction module which corrects the impedance of the set of measuring electrodes. The electrode error correction module corrects the impedance of the set of measuring electrodes during a measurement state by providing the impedance difference with regard to oxidation and abrasion between the point in time before the set of multifunctional electrodes is in use and the point in time after the set of multifunctional electrodes is in use. The electrode error correction module works on condition that the degree of oxidation and abrasion of the set of multifunctional electrodes must equal the degree of oxidation and abrasion of the set of measuring electrodes, because they are disposed on the same electrochemical test strip and made of identical or similar materials. The degree of oxidation and abrasion of the set of multifunctional electrodes before and after use is evaluated by measuring the difference between the impedance value of the set of multifunctional electrodes connected to the connector and a predetermined impedance value, wherein the predetermined impedance value is, for example, an impedance value measured upon delivery of the electrochemical test strip. Referring to FIG. 4, in an embodiment, the electrochemical test strip 100 is inserted into the measuring meter 480 prior to the introduction of a sample into the electrochemical test strip 100, and in consequence a loop state is formed by the short-circuit part 242 of the set of multifunctional electrodes 240 and the connector 410. Afterward, the measuring meter 480 is switched to the electrode error correction module (such as module n (438)) to measure the difference between the impedance value of the set of multifunctional electrodes 240 and the predetermined impedance value, thereby figuring out an error attributed to the degree of oxidation and abrasion of the set of multifunctional electrodes 240. The processor 440 corrects the impedance of the set of measuring electrodes 210/220 in accordance with the error. In an embodiment, the electrical contact between the connector 410 and the set of measuring electrodes 210/220 and the electrical contact between the connector 410 and the set of multifunctional electrodes 240 occur on the same plane to therefore minimize the discrepancy in friction and oxidation sustained by and between the set of multifunctional electrodes 240 and the set of measuring electrodes 210/220. In another embodiment, the set of multifunctional electrodes 240 and the set of measuring electrodes 210/220 are entirely disposed on the same plane, wherein the set of multifunctional electrodes 240 is preferably positioned proximate to the set of measuring electrodes 210/220.

In conclusion, an electrochemical test strip of the present invention has an electrode system which is simpler to use than those from the prior art and can be operated in conjunction with a measuring meter of a measuring apparatus in executing multiple function modules. The present invention is not intended to restrict the types and quantity of function modules. In addition to what are disclosed above, the present invention may be interpreted to include additional electrochemical test strip type identification function module, a measuring meter built-in check switch module, or a module for use in assisting with the electrodes during a measurement process.

Although the present invention is disclosed above by preferred embodiments, the preferred embodiments are not restrictive of the present invention. Any persons skilled in the art can make changes to the preferred embodiments without departing from the spirit and scope of the present invention. Accordingly, the present invention should be defined by the appended claims and covers, either literally or by equivalence, all devices, test strips and modules which are recited in the claims.

## Claims

1. An electrochemical test strip, comprising:
a set of measuring electrodes; and
a set of multifunctional electrodes electrically isolated from the set of measuring electrodes, the set of multifunctional electrodes being formed with an short-circuit part and an open-circuit part connecting the short-circuit part, the set of multi-functional electrodes being able to electrically connect a measuring meter, wherein a loop state is formed when the short-circuit part electrically connects the measuring meter and an open-circuit state is formed when the open-circuit part electrically connects the measuring meter,
wherein, the meter comprises at least two function modules, and both of the at least two function modules are executed by way of the short-circuit part, or by way of the open-circuit part, or one of the at least two function modules is executed by way of the short-circuit part and the other one of the at least two function modules is executed by way of the open-circuit part.

2. The electrochemical test strip of claim 1, wherein the electrochemical test strip has the set of measuring electrodes and the set of multifunctional electrodes but is free of any other circuits.

3. The electrochemical test strip of claim 2, wherein the set of measuring electrodes only comprises a set of sample measuring electrodes and a set of sample background measuring electrodes.

4. The electrochemical test strip of claim 1, wherein the set of multifunctional electrodes has only one the short-circuit part.

5. The electrochemical test strip of claim 1 or 4, wherein the set of multifunctional electrodes has only one the open-circuit part.

6. The electrochemical test strip of claim 1, wherein the set of measuring electrodes defines a measurement zone for measuring a sample, with the open-circuit part configured to allow the sample to come into contact with the measurement zone before coming into contact with the open-circuit part.

7. The electrochemical test strip of claim 1, wherein the set of multifunctional electrodes is of a shape selected from the group consisting of H shape, Y shape, X shape, V shape, U shape, 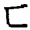 shape, I shape, and Λ shape.

8. The electrochemical test strip of claim 1, wherein the set of multifunctional electrodes is disposed closer to a center of the electrochemical test strip than the set of measuring electrodes.

9. A measuring apparatus, comprising the electrochemical test strip and the measuring meter according to any one of claims 1-8.

10. The measuring apparatus of claim 9, wherein, when the electrochemical test strip not carrying any sample is electrically connected to the measuring meter, the measuring meter forms the loop state together with the short-circuit part, forms the open-circuit state together with the open-circuit part, and forms another open-circuit state together with the set of measuring electrodes.

11. The measuring apparatus of any one of claims 9-10, wherein the at least two function modules comprise a wake-up function module for activating the measuring meter, and the formation of the loop state produces a signal sent to a processor of the measuring meter to activate the measuring meter.

12. The measuring apparatus of any one of claims 9-10, wherein the at least two function modules comprise an electrostatic protection module for protecting the measuring meter against electrostatic charges from the electrochemical test strip, wherein the open-circuit part guides the electrostatic charges to a ground path or an electrostatic protection circuit of the measuring meter.

13. The measuring apparatus of any one of claims 9-10, wherein the set of measuring electrodes defines a measurement zone for measuring a sample and a connection zone electrically connected to the measuring meter, and the at least two function modules comprise a quantity measuring module for determining whether a sample has fully covered the measurement zone, wherein the open-circuit state turns into a state of electrical connection of the open-circuit part and the set of measuring electrodes as soon as the sample comes into contact with the open-circuit part, so as to determine that the sample has fully covered the measurement zone.

14. The measuring apparatus of any one of claims 9-10,, the measuring meter comprises a connector for electrically connecting the set of measuring electrodes and the set of multifunctional electrodes to the measuring meter, wherein an electrical contact between the connector and the set of measuring electrodes and an electrical contact between the connector and the set of multifunctional electrodes occur on a same plane.

15. The measuring apparatus of any one of claims 9-10, wherein the at least two function modules comprise an electrode impedance correction module for correcting an impedance of the set of measuring electrodes, wherein the loop state formed upon electrical connection of the short-circuit part and the measuring meter allows the measuring meter to measure an impedance value of the multifunctional electrode, so as to obtain a difference between the impedance value and a predetermined impedance value, and correct the impedance of the set of measuring electrodes in accordance with the difference.
